# EUROPEAN PATENT SPECIFICATION

(11) **EP 4 204 604 B1**
(45) Date of publication and mention of the grant of the patent: **02.10.2024**
(21) Application number: 21763107.6
(22) Date of filing: 27.08.2021
(51) Int. Cl.: C25B 1/04, C25B 11/031, C25B 11/053, C25B 11/056, C25B 11/061, C25B 11/091, C25B 11/093, C23C 4/08, C23C 4/18

(54) **ELECTRODE WITH ENHANCED SHUTDOWN TOLERANCE**
ELEKTRODE MIT VERBESSERTER ABSCHALTTOLERANZ
ÉLECTRODE À TOLÉRANCE AMÉLIORÉE À L'ARRÊT

(30) Priority: 28.08.2020 IT 202000020587
(43) Date of publication of application: 05.07.2023
(73) Proprietor: Industrie De Nora S.P.A., 20134 Milano (IT)
(72) Inventor: PINO, Francesco, 20134 Milan (IT); TAKAAKI, Nakai, Fujisawa City, Kanagawa 252 (JP); KATO, Akihiro, Fujisawa City, Kanagawa 252 (JP)
(74) Representative: Reitstötter Kinzebach
(86) International application number: PCT/EP2021/073772
(87) International publication number: WO 2022/043509

(56) References cited:
- EP-A1- 3 064 614
- EP-A1- 3 296 431
- EP-A1- 3 375 906
- WO-A1-2019/172160

## Description

### TECHNICAL FIELD

The present disclosure relates to electrodes and more particularly to electrodes for use in electrolysis processes.

### BACKGROUND

Hydrogen is emerging as an important part of the clean energy paradigm. It can be used as a high efficiency, low polluting fuel, as well as an energy carrier for moving, storing and delivering energy from renewable energy sources. Moreover, hydrogen can be produced from water, which is an abundant and relatively inexpensive feedstock.

A number of different processes can be used for producing hydrogen from water. These processes include water electrolysis, photo-electrolysis, photo-biological production and high temperature decomposition. Of these processes, water electrolysis is the most practical way to produce hydrogen using renewable energy sources, such as power from wind turbines and/or photovoltaic solar panels.

There are several types of water electrolysis processes that are used for hydrogen generation, namely alkaline electrolysis, proton exchange membrane (PEM) electrolysis, and solid oxide electrolytic cell (SOEC) electrolysis. Alkaline electrolysis and PEM electrolysis are more commonly utilized, with alkaline electrolysis being the most advanced and most suitable for large-scale implementation.

In water electrolysis, a DC electrical power source is connected to two electrodes, which are placed in water. Theoretically, a potential difference between the electrodes of 1.23 volts will split water into hydrogen and oxygen. Hydrogen is produced at the cathode, while oxygen is produced at the anode. More specifically, there is a hydrogen evolution reaction ("HER") at the cathode and an oxygen evolution reaction ("OER") at the anode. The HER is a reduction reaction in which electrons (e⁻) from the cathode are given to hydrogen cations to form hydrogen gas, while the OER is an oxidation reaction in which electrons are given to the anode and oxygen is generated.

While 1.23 volts will theoretically split water, a higher voltage is required in practice. The amount that exceeds 1.23 volts is called overpotential or overvoltage and represents lost energy or inefficiency. In the water electrolysis process, the largest overvoltage is the reaction overvoltage for the oxidation of water to oxygen at the anode. As such, significant effort has been exerted to reduce the overvoltage at the anode.

In alkaline electrolysis, the water contains an alkaline electrolyte, such as potassium hydroxide (KOH) or sodium hydroxide (NaOH), and the electrodes are separated by a diaphragm. In PEM electrolysis, the water is deionized, and the electrodes are separated by a solid polymer electrolyte that permits protons from the anode to pass to the cathode, while insulating the electrodes electrically.

Recent advancements in water electrolysis have resulted in the process being operated at a higher current density. In addition, renewable energy sources are often used to provide electrical power for performing water electrolysis. The use of higher current densities, coupled with the intermittent nature of renewable energy, puts enhanced stress on the electrodes, causing conventional electrodes to deteriorate more rapidly. As such there is a need for more robust electrodes that provide good performance, while being less susceptible to degradation under conditions of high current density and intermittent power, i.e. numerous power shutdowns. In particular, there is a need for an anode with reduced oxygen overvoltage that is not susceptible to degradation due to high current density and shutdowns.

EP 3296431 A1 describes an oxidized nickel foam electrode having a coating layer comprising crystalline nanoparticles which include nickel, nickel oxide and ion oxide. WO 2019/172160 A1 describes an alkaline water electrolysis anode comprising a conductive substrate having an intermediate layer made of nickel oxide and a catalyst layer. EP 3064614 A1 describes an anode for alkaline water electrolysis having a nickel substrate and a lithium-containing nickel oxide catalytic layer formed on the substrate. EP 3375906 A1 describes an anode for electrochemical reactions which includes a nickel substrate and a nickel oxide layer on the conductive substrate and an oxidation catalyst layer disposed on the oxide layer.

### SUMMARY

In accordance with the present disclosure, an electrode is provided for use in an alkaline electrolysis process. The electrode includes a metal substrate and a catalytic layer disposed on the metal substrate. The catalytic layer includes nickel and nickel oxide and has a porosity less than about 1 m²/g measured by BET. An active composition is disposed both on and within the catalytic layer. The active composition includes one or more metal compounds selected from the group consisting of a cobalt compound, an iridium compound, a rhodium compound, an iron compound, a platinum compound, a lithium compound and a manganese compound.

Also provided in accordance with the present disclosure is an alkaline water electrolysis unit that includes the electrode, which functions as an anode. The unit also includes a cathode and an electrolyte solution that is substantially free of chlorine.

A method of forming an electrode is also disclosed herein. In accordance with the method, a metal substrate is provided and a catalytic layer is formed on the metal substrate. The catalytic layer includes nickel and nickel oxide formed by thermal spraying, cold spraying or other surface finishing process such as laser cladding and electroplating, and has a porosity less than about 1 m²/g (BET). An active composition is applied to the catalytic layer and is thermally decomposed. The active composition includes one or more metal compounds selected from the group consisting of a cobalt compound, an iridium compound, a rhodium compound, an iron compound, a platinum compound, a lithium compound and a manganese compound.

### BRIEF DESCRIPTION OF THE DRAWINGS

The features, aspects, and advantages of the present invention will become better understood with regard to the following description, appended claims, and accompanying drawings where:
Fig. 1 shows a schematic representation of a water electrolysis unit;
Fig. 2 shows a schematic representation of an electrode of the water electrolysis unit;
Fig. 3 shows a graph of average capacitance for a plurality of test electrodes having different catalytic layers;
Fig. 4 shows a graph of released charge for the test electrodes;
Fig. 5 shows a graph of capacitance versus released charge for the test electrodes.
Fig. 6 shows an SEM image of a cross-section of an electrode according to the present invention;
Fig. 7 shows an SEM/EDAX image of the nickel and iridium distribution of the same region of the electrode of Fig. 6; and
Fig. 8 shows an SEM/EDAX image of the oxygen distribution of the same region of the electrode Fig. 6, overlaid to the SEM image of Fig. 6.

### DETAILED DESCRIPTION OF ILLUSTRATIVE EMBODIMENTS

It should be noted that in the detailed descriptions that follow, identical components have the same reference numerals, regardless of whether they are shown in different embodiments of the present disclosure. It should also be noted that for purposes of clarity and conciseness, the drawings may not necessarily be to scale and certain features of the disclosure may be shown in somewhat schematic form.

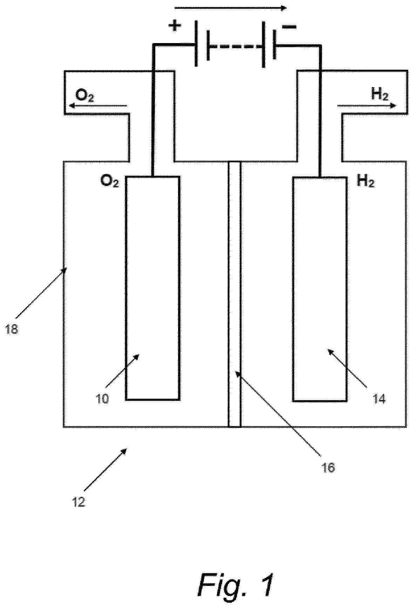

The present disclosure is directed to an electrode 10 constructed for use in an electrolysis process. The electrode 10 is especially suited for use in an alkaline electrolysis process and, more particularly, as an anode in such a process. A unit 12 that may be used for performing alkaline water electrolysis is shown in Fig. 1. The unit 12 may include the electrode 10, functioning as an anode, and a cathode 14. The electrode (anode) 10 and the cathode 14 are separated by a diaphragm 16 and are disposed in a vessel 18 containing an electrolyte solution. The electrolyte solution used in the electrolysis process preferably does not include chlorine or other halides. The electrolyte solution may comprise water and potassium hydroxide (KOH) or water and sodium hydroxide (NaOH). The diaphragm 16 is composed of a microporous material with an average pore size of less than 1 µm, which allows ions to move between the electrode (anode) 10 and the cathode 14, but is impermeable to gas, thereby preventing the intermixing of generated hydrogen and oxygen gases. The diaphragm 16 may be composed of a porous polymer, such as polytetrafluoroethylene (PTFE), or a composite material comprising zirconium dioxide (ZrO₂) and polysulfone, which at the time of writing is commercially sold under the trademark Zirfon^{®}.

The reactions that occur at the electrode (anode) 10 and the cathode 14 are as follows:
cathode:

   2H₂O + 2e⁻ ------> H₂ + 2OH⁻
anode:

   2OH⁻ ------> ½O₂ + H₂O + 2e⁻

The cathode 14 is composed of conductive metal, which may be nickel, low carbon steel, or stainless steel. The cathode 14 may have a structure as described below for the electrode 10 and may be coated with nickel or a nickel-iron alloy.

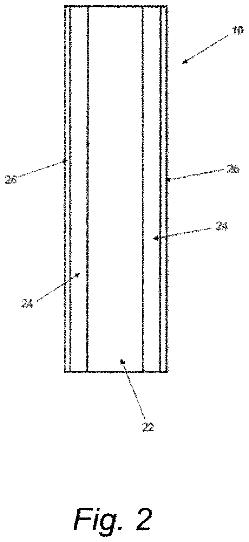

Referring now to Fig. 2, the electrode 10 includes a substrate 22 upon which a catalytic layer 24 is disposed. The catalytic layer 24 has pores formed therein, but is only moderately porous. An active composition 26 is disposed in and/or on the catalytic layer 24. The active composition 26 may form a layer and/or its constituent components may be interspersed into the pores of the catalytic layer 24. In some embodiments, the active composition 26 does not form a layer and its constituent parts are distributed throughout the porosity of the catalytic layer 24. In other embodiments, the active composition 26 forms a layer on the catalytic layer 24 and its constituent parts are also distributed throughout the porosity of the catalytic layer 24. The catalytic layer 24 may be disposed over all of the outer surfaces of the substrate 22 and, similarly, the active composition 26 may be disposed in and/or on all of the catalytic layer 24. In Fig. 2, the electrode 10 is shown as having a rectangular configuration, with opposing major surfaces being covered with the catalytic layer 24 and the active composition 26. While not shown, end surfaces of the electrode 10 may also be covered with the catalytic layer 24 and the active composition 26. The catalytic layer 24 and the active composition 26 are applied to the substrate 22 so as to be substantially uniform in thickness and composition over the exterior of the substrate 22. Preferably, deiviations in thickness are mostly within a +/- 5 µm range.

Structurally, the substrate 22 may be punched plate, woven wire, wire mesh, metal sponge, expanded metal, perforated or unperforated metal sheet, flat or corrugated lattice work, spaced apart rods or strips, or other structural forms. The wire mesh has been found to work particularly well in the execution of the invention. The thickness of the substrate 22 is preferably from about 0.15 mm to about 3.0 mm and more preferably from about 0.6 mm to about 2.0 mm. Preferably, the substrate 22 has openings to reduce current density. The substrate 22 is composed of a conductive metal, such as iron, iron alloy, nickel, nickel alloy or stainless steel. Iron alloys that may be used include iron-nickel alloys, iron-chromium alloys and iron-nickel-chromium alloys. Nickel alloys that may be used include nickel-copper alloys and nickel chromium alloys. Preferably, the substrate 22 is comprised of nickel, a nickel alloy or an iron alloy. A nickel plain weave wire mesh has been found especially suitable for use as the substrate 22.

The catalytic layer 24 is formed from a metal using a suitable thermal spraying process, such as flame spraying, wire-arc spraying, plasma spraying, high velocity oxyfuel (HVOF) spraying, high velocity air-fuel (HVAF) spraying, detonation gun and combustion wire spraying. Wire-arc spraying and plasma spraying have been observed to work particularly well in the execution of the invention. The catalytic layer 24 may alternatively be formed from a metal using cold spraying or another type of surface finishing process, such as laser cladding and electroplating.

The metal from which the catalytic layer 24 is formed may be nickel or a nickel alloy and/or nickel oxide (NiO). However, nickel is preferred. In this regard, it has been found that using a nickel-aluminum alloy that is de-alloyed after deposition with a caustic solution produces a porous nickel layer that tends to be too brittle and deteriorates too quickly. Preferably, nickel is deposited on the substrate 22 using nickel powder in an atmospheric plasma spraying (APS) process, a cold gas spraying process or a wire-arc spraying process. More preferably, nickel is deposited on the substrate 22 using nickel powder in an APS process. The nickel powder that is used to form the catalytic layer 24 has a mean particle size of from about 10 µm to about 150 µm, more preferably from about 45 µm to about 90 µm.

Before the metal (e.g., nickel) powder is sprayed onto the substrate 22, the substrate 22 is treated to remove contaminants and condition its surface for receipt of the metal powder. The treatment may include removing oil and grease through a degreasing process using a solvent. A grit blasting process is preferably performed on the substrate 22 after any degreasing process has been performed. In the grit blasting process, abrasive media, such as chilled iron or aluminum oxide, is pressurized with compressed air and directed against the surfaces of the substrate 22. The grit blasting further removes any contaminants and roughens the surfaces to form pits and crevices that promote mechanical bonding of the metal powder that is sprayed on the surfaces. Debris from the grit blasting may be removed by vacuum cleaning, brushing and/or air blowing.

An APS process may be performed with a plasma torch in which a strong electric arc is generated between a positively charged pole (anode) and a negatively charged pole (cathode). The arc ionizes flowing process gas (such as a mixture of argon, hydrogen, nitrogen and helium) into a plasma state to form a plasma jet, which may have a temperature in range of from about 10,000°C to about 30,000°C. Typically, the anode is circular and helps form a nozzle through which the plasma jet is ejected. The anode may be composed of copper, while the cathode may be composed of thoriated tungsten. Metal (e.g. nickel) powder is fluidized in a carrier gas (which may include hydrogen) and fed into the plasma jet, melting the powder particles and propelling them at high speeds (such as between 300 to 550 m/s) onto the substrate 22. During their travel to the substrate 22, some of the molten metal particles are oxidized to form oxides, such as nickel oxide (NiO). As such, when the catalytic layer 24 is formed using APS, the catalytic layer 24 includes both nickel and nickel oxide.

The molten metal particles sprayed from the plasma torch impact the substrate 22, where they flatten into "splats", which shrink and solidify to form stacked lamellae with micro-features, such as pores. As the splats shrink and solidify, they mechanically bond to the substrate 22 through mechanical hooking. As such, the adhesion of the sprayed metal particles is primarily due to mechanical bonding.

In a cold spraying process, metal (e.g. nickel) powder is fluidized in a highpressure stream of carrier gas, which is preheated to a temperature of up to 1,000°C and may be comprised of nitrogen, helium or air. The stream of carrier gas and metal particles is passed through a converging-diverging DeLaval nozzle, where the stream is cooled and accelerated to a supersonic velocity of over 1,000 m/s. The supersonic stream of metal particles and carrier gas is directed onto the substrate 22, where the metal particles undergo plastic deformation upon impact. The accelerated metal particles impact the substrate 22 with enough kinetic energy to induce mechanical and/or metallurgical bonding between the metal particles and the substrate 22. Unlike in a thermal spraying process, such as APS, the metal particles are not melted during the cold spraying process.

In some embodiments, after the catalytic layer 24 has been formed, such as by APS or cold spraying, the substrate 22 coated with the catalytic layer 24 is heated in an oven at a temperature of from about 300°C to about 500°C for a period of from about 10 to about 20 minutes. In some embodiments, the substrate 22 coated with the catalytic layer 24 may be heated in an atmosphere comprising hydrogen.

The catalytic layer 24 is formed so as to have a thickness on one side of the substrate 22 of between about 10 µm to about 300 µm. Surprisingly, it has been found that with a thickness of 50 µm or less on each side of the substrate 22, the electrode 10 exhibits surprisingly good properties, in that it may reduce the reversal currents generated during shutdowns. As such, the catalytic layer 24 may have a thickness of 50 µm or less and more specifically in a range of from about 10 µm to about 50 µm, even more specifically in a range of from about 30 µm to about 50 µm.

As set forth above, the catalytic layer 24 is only moderately porous. Porosity may be measured by different methods, such as the well-known Brunauer-Emmett-Teller (BET) method or mercury (Hg) porosimetry. The BET method determines the overall specific external and internal surface area of a porous solid (per unit mass) from a measurement of the physical adsorption of gas molecules (e.g. nitrogen) by the porous solid. The determined BET surface area in m²/g provides a measure of porosity. Using the BET method, the catalytic layer 24 has a porosity of less than 1 m²/g.

Porosity can be correlated with electrochemical properties. As is known, the double layer capacitance of an electrode is directly related to the total surface area of the electrode. With respect to the BET, the measurement of the double layer capacitance allows to more specifically gauge the "active porosity" of the electrode, i.e. the surface area that is actually accessible to the electrolyte for the electrochemical reaction. Therefore, in alternative or in addition to the the determined BET surface area in m²/g, the porosity of catalytic layer 24 may be characterized in terms of its double layer capacitance, before or after being coated with the active composition 26, normalisied by the loading of the catalytic layer 24. The loading of the catalytic layer 24 is measured as the amount of metal (in grams) per cm². The normalised double layer capacitance of the catalytic layer 24 is between from about 1.0 to about 10.0 mF/g, and preferably between from about 3.0 to about 7.0 mF/g. The double layer capacitance before normalization is measured in mF/cm² according to the procedure set forth below. Typical loading of the catalytic layer 24 is 50 and 1200 g/m², more preferably between 100 and 600 g/m². Lower loadings of the catalytic layer 24 are more cost efficient as they obviously require less material in the catalytic layer but also less of the the usually costly active composition 26, which otherwise may get excessively diluted. In some applications, for example, without limitation, applications involving leaching of the active composition 26, typical loadings may be higher, between 100-3000 g/m² referred to the metal.

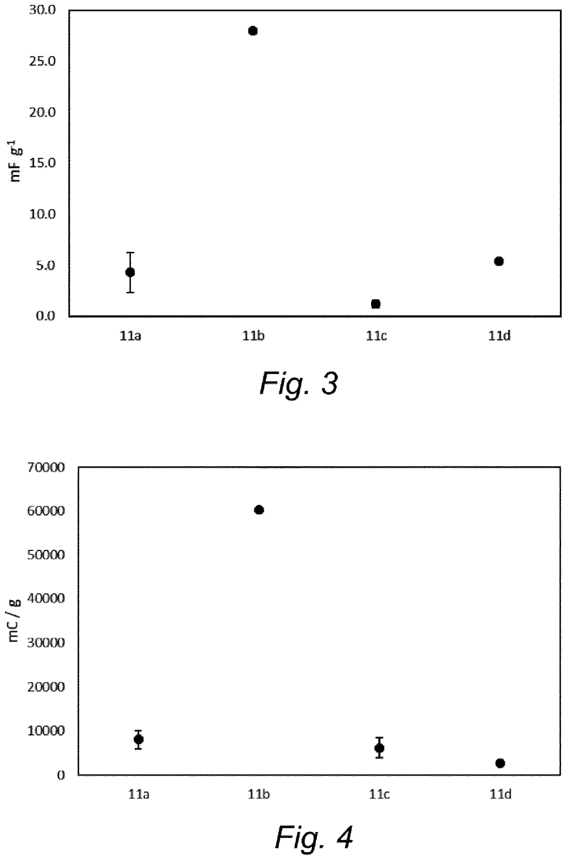

**The** double layer capacitance of catalytic layers 24 having different compositions was studied in relevant conditions, i.e. KOH 25% and T = 80°C, using test electrodes 11. Each test electrode 11 included a substrate 22 of nickel expanded mesh. In a first test electrode 11a, the substrate 22 was plasma coated with nickel; in a second test electrode 11b, the substrate 22 was plasma sprayed with a nickel-aluminum alloy; in a third test electrode 11c, the substrate 22 was wire-arc sprayed using two nickel wires; in a fourth test electrode 11d, the substrate was wire-arc sprayed with two wires, each composed of a nickel-aluminum alloy. The test electrodes 11 were initially conditioned by performing 10 minutes polarization at 2 kA/m². Successively, voltammetric scans were performed in the potential region from 0.25 V to 0 V vs Hg/HgO at different scan rates (it is understood that, in general, the skilled person will select appropriate potential regions compatible with the active composition 26, in order to avoid interference due to possible faradic processes). The electrochemical double layer capacitance was estimated using the standard equation dE/dt = C_{dl} · dQ/dt. The test electrodes 11 showed a specific capacitance (normalized by the catalytic layer 24 load) in a range of from about 0.5 to about 30 mF/g, as shown in Fig. 3, which plots the average capacitance versus electrode type (11a-11d). Notably, the test electrodes 11a, 11c, 11d were desirably in a range of from about 1.0 to about 10.0 mF/g. The electrodes 11b and 11d containing Al were preventively leached in a KOH (30%) solution at 80°C for 2 hours.

The test electrodes 11 were characterized by the amount of charge they could release when subjected to a reverse current in relevant conditions, i.e. KOH 25% and T = 80°C. The test electrodes 11 were each initially conditioned by performing 2 hours of anodic polarization at 10 kA/m². Successively, a chronopotentiometric step was performed, by applying a cathodic current of 120 A/m² until the electrode potential was recorded as -0.8V vs SHE (standard hydrogen electrode). The total amount of charge released from the test electrode 11 was then calculated by integrating the current over time. The test electrodes 11 were able to release a controlled charge (normalized by the coating load) in a range of from about 1,000 to about 70,000 mC/g, as shown in Fig. 4, which plots the normalized average charge versus electrode type (11a-11d). Notably, the test electrodes 11a, 11c and 11d were desirably in a range of from about 2,000 to about 10,000 mC/g.

In certain embodiments, more than 90 percent by weight of nickel in the catalytic layer is in its metal form while up to 10 percent by weight of nickel is in its oxide form, predomently NiO, i.e. in the latter case, the weight percentage refers to NiO. Preferably, the metallic nickel content in the catalytic layer is in the range from 90 to 99.5 wt%, preferably in the range from 95 to 99 wt.%. The nickel oxide content in the catalytic layer can be in a range from at least 0.5 wt% to 10 wt% and is preferably in the range from 1 to 5 wt%.

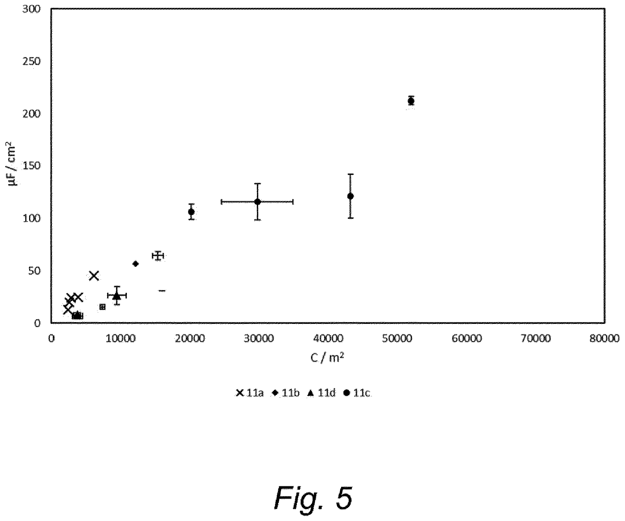

It is believed that the optimal performances of the electrode configuration is due to the controlled charge release from the porous nickel layer. Also, a certain amount of porosity of the nickel/nickel oxide layer is desired in order to enhance the number of accessible catalytic sites. It can be expected that the relation between porosity and charge release will vary depending on nature of the layer. The control of the porosity/capacitance is used to control electrode robustness (charge). As shown in Fig. 5, which plots average capacitance (y-axis) versus average charge (x-axis) for electrodes 11a-11d, a linear relationship exists between capacitance and released charge for the electrodes 11 having a catalytic layer 24. It was thus demonstrated that the examined electrode configurations are characterized by the same, appropriate relationship between porosity/capacitance and charge release.

The active composition 26 includes one or more metals selected from the group consisting of iridium (Ir), cobalt (Co), rhodium (Rh), Iron (Fe), Platinum (Pt), Lithium (Li), manganese (Mn). The iridium in the active composition 26 may be an iridium compound, such as iridium oxide (IrO₂). The cobalt in the active composition 26 may be a cobalt compound, such as a cobalt oxide, namely cobalt (II) oxide (CoO) or cobalt (II, III) oxide (Co₃O₄), or nickel cobaltite (NiCo₂O₄). Preferably, cobalt that is in the active composition 26 is nickel cobaltite. Even more preferably, nickel cobaltite that is in the active composition 26 is in the form of spinels. The rhodium in the active composition 26 may be a rhodium compound, such as rhodium (III) oxide (Rh₂O₃); the manganese in the active composition 26 may be a manganese compound, such as manganese oxide (MnO₂); the iron in the active composition 26 may be an iron compound, such as iron oxide (Fe₂O₃) or Fe₃O₄; the platinum in the active composition 26 may be a platinum compound, such as platinum oxide (PtO₂); the lithium in the active composition 26 may be a mixed compound, such as lithium nickel oxide (LiNiO₂).

In some embodiments, the active composition 26 may consist essentially of a cobalt compound, a nickel compound, an iridium compound, a lithium compound (e.g. lithium nickel oxide), or an iron compound (e.g. iron oxide). Alternately, the active composition 26 may consist essentially of a cobalt compound and an iridium compound, or the active composition 26 may comprise a cobalt compound or an iridium compound or both a cobalt compound and an iridium compound. Preferably, the active composition 26 comprises a cobalt compound or an iridium compound, more preferably both a cobalt compound and an iridium compound, still more preferably the active composition 26 comprises nickel cobaltite and iridium oxide. Thus, the active composition 26 may comprise: 0-100 mole percent of an iridium compound, 0-100 mole percent of a cobalt compound and 0-40 mole percent of one or more transition metal compounds selected from the group consisting of a rhodium compound, a manganese compound, an iron compound, a platinum compound, a lithium compound. More preferably, the active composition 26 may comprise: about 10-50 mole percent of an iridium compound, about 40-90 mole percent of a cobalt compound and 0-20 mole percent of one or more transition metal compounds selected from the group consisting of a rhodium compound, a manganese compound, an iron compound, a platinum compound, a lithium compound. More preferably, the active composition 26 may comprise: about 10-30 mole percent of an iridium compound, more than 70 mole percent of a cobalt compound and 0-10 mole percent of one or more transition metal compounds selected from the group consisting of a rhodium compound, a manganese compound, an iron compound, a platinum compound, a lithium compound. Still more preferably, the active composition 26 may comprise: 10-30 mole percent of an iridium compound, 70-90 mole percent of a cobalt compound and 0-10 mole percent of one or more transition metal compounds selected from the group consisting of a rhodium compound, a manganese compound, an iron compound, a platinum compound, a lithium compound.

The catalytic layer 24 and the active layer 26, taken together as a combination, comprise from about 80 mole percent to about 99.9 mole percent nickel, from 0 to about 2 mole percent nickel oxide, from about 0 mole percent to about 0.8 mole percent of an iridium compound, from about 0 mole percent to about 2 mole percent of a cobalt compound, and from about 0 to about 2 mole percent of one or more transition metal compounds selected from the group consisting of a rhodium compound, a manganese compound, an iron compound, a platinum compound, a lithium compound.

The active composition 26 may be formed from one single precursor composition that is applied to the catalytic layer 24 in one or more application processes, or the active composition 26 may be formed from a plurality of different precursor compositions that are applied to the catalytic layer 24 in a plurality of application processes. As set forth above, the active composition 26 may form a layer on top of the catalytic layer 24 as schematically depicted in Fig. 2 and/or the active composition 26 may be absorbed into the catalytic layer 24 and become distributed throughout the porosity of the catalytic layer 24. In this manner, the layer of the active composition 26 may have a thickness from about 0 to about 20 µm, more preferably from about 0 to about 10 µm.

Generally, the precursor composition(s) include precursor compounds (such as organic or inorganic metal salts) that are thermally decomposable to form the metal compounds in the active composition 26. The metal salts may be chlorides and may be dissolved in solvents, including acids (such as hydrochloric acid and nitric acid) and alcohols, such as isopropyl alcohol, n-propyl alcohol, n-butyl alcohol and ethyl alcohol. Some examples of the precursor compound(s) are given below.

For iridium oxide, the precursor compound(s) may include the chloride, sulfate or nitrate salt of iridium dissolved in a solvent, such as an acid or an alcohol. More specifically, the precursor compound(s) may include a solution of iridium (III) chloride (IrCl₃) in its trihydrate form (IrCl₃(H₂O)₃), together with hydrochloric acid and isopropyl alcohol and/or ethyl alcohol.

For cobalt (II) oxide, the precursor compound(s) may include cobalt chloride (CoCl₂) and water. For cobalt (II, III) oxide, the precursor compound(s) may include cobalt (II) acetate tetrahydrate (C₄H₆CoO₄_4H₂O), ethyl alcohol and oxalic acid (C₂H₂O₄).

For nickel cobaltite, the precursor compound(s) may include nickel (II) acetate tetrahydrate (C₄H₆NiO₄ _4H₂O) and cobalt (II) acetate tetrahydrate (C₄H₆CoO_{4_}4H₂O) mixed with urea (CO(NH₂)₂, deionized water, ethyl alcohol, glycerol and tetraethylene glycol (TEG), wherein the nickel (II) acetate and the cobalt (II) acetate are co-precipitated. Alternately, the precursor compound(s) may include nickel (II) nitrate hexahydrate (Ni(NO₃)₂·6H₂O) and cobalt(II) nitrate hexahydrate (Co(NO₃)₂·6H₂O), which may be dissolved in NH₄OH.

The precursor composition(s) may be applied to the catalytic layer 24 using a brush, or by electrospraying, roller coating or dip coating.

After the precursor composition(s) have been applied to the catalytic layer 24, the substrate 22 coated with the catalytic layer 24 and the precursor composition(s) is heated to thermally decompose the precursor compound(s) to form the active composition 26. The heating may take place in an oven at a temperature of from about 300°C to about 500°C for a period of from about 10 to about 20 minutes.

### EXAMPLE 1

A 100X100 mm piece of nickel wire woven mesh, with a 0.17 mm diameter wire, was plasma sprayed with 99.9% purity nickel powder with a particle size of -45 / +10 µm (Fe <0.5, O<0.4, C<0.02, S<0.01 in ambient air on both sides in an amount of 4.8 ± 0.5 g/dm² and with a target thickness of 50 µm (on each side). Afterwards, the sprayed wire mesh was heated in an oven at 350°C for 15 minutes in air. The plasma-sprayed woven mesh was allowed to cool and then was coated with a precursor composition, by means of a brush, in a series of coating, heating and cooling steps. The precursor composition comprised 19.77 g of nickel(II) nitrate hexahydrate and 39.56 g of cobalt(II)/nitrate hexahydrate, brought to a volume of 100mL with DI water. Initially, the plasma-sprayed wire mesh was coated with the precursor composition and then heated in air in an oven at 350°C for 15 minutes. After cooling, the wire mesh was again coated with the precursor composition and again heated in the oven at 350°C for 15 minutes. This process of coating, heating and cooling was repeated to achieve a load of 7.52 g_{METAL}/m².

The foregoing process produced an electrode E1 having, on each side, a catalytic layer and an active composition. The catalytic layer was mostly nickel with a small amount of NiO. The active composition comprised 0.0427 mol/ m² of nickel cobaltite. When viewed with a scanning electron microscope (SEM), the catalytic layer was a nickel matrix formed by nickel particles and a thin crust of NiO, with the nickel cobaltite being distributed into the porosity of the catalytic layer.

The combination of the catalytic layer and the active composition had a thickness (on one side) of 51 ± 6 µm and had a porosity of 0.3 m²/g (BET). The combination comprised 97.6 mole percent nickel, 0.9 mole percent nickel oxide and 1.5 mole percent nickel cobaltite.

### EXAMPLE 2

A 100X100 mm piece of nickel expanded mesh was plasma sprayed with 99.9% purity nickel powder with a particle size of -45 / +10 µm (Fe <0.5, O<0.4, C<0.02, S<0.01 in ambient air on both sides in an amount of 4.5 ± 0.5 g/dm² and with a target thickness of 45 µm (on each side). Afterwards, the sprayed wire mesh was heated in an oven at 350°C for 15 minutes in air. The plasma-sprayed expanded mesh was allowed to cool and then was coated with first and second precursor compositions, as described below.

The first precursor compostion was the same as the precursor composition applied in Example 1, i.e. the solution of nickel (II) nitrate hexahydrate and cobalt (II) nitrate hexahydrate. The first precursor composition was also applied to the mesh in the same manner as in Example 1 to achieve a load of 7.52 g_{METAL}/m².

The second precursor composition comprised 4.27g of hexa-ammineiridium(III) hydroxide [Ir(NH₃)₆](OH)₃ brought to a volume of 100mL with deionized water. After the application of the first precursor composition, the second precursor composition was applied by brush in a series of coating, heating and cooling steps. Initially, the plasma-sprayed and coated mesh was coated with the second precursor compositions and then heated in an oven at 350°C for 15 minutes in air. After cooling, the mesh was again coated with the second precursor composition and again heated in the oven at 350°C for 15 minutes. This process of coating, heating and cooling was repeated to achieve a load of 1.88 g_{METAL}/m².

The foregoing process produced an electrode E2 having, on each side, a catalytic layer and an active composition. The catalytic layer was mostly nickel with a small amount of NiO. The active composition was 9.78 mmol/m² of iridium oxide and 42.7 mmol/m² of nickel cobaltite, which corresponds to 18.6 mole percent iridium oxide and 81.4 mole percent nickel cobaltite. When viewed with a scanning electron microscope (SEM), the catalytic layer was a nickel matrix formed by nickel particles and a thin crust of NiO, with the iridium oxide and the nickel cobaltite being distributed into the porosity of the catalytic layer. The combination of the catalytic layer and the active composition had a thickness (on one side) of just less than 50 µm and had a porosity of 0.4 m²/g (BET). The combination comprised comprised 98.8 mole percent nickel, 0.12 mole percent iridium oxide and 0.53 mole percent cobaltite.

### EXAMPLE 3

A 100X100 mm piece of nickel expanded mesh was plasma sprayed with 99.9% purity nickel powder with a particle size of -45 / +10 µm (Fe <0.5, O<0.4, C<0.02, S<0.01 in ambient air on both sides in an amount of 4.5 ± 0.5 g/dm² and with a target thickness of 45 µm (on each side). Afterwards, the sprayed expanded mesh was heated in an oven at 350°C for 15 minutes in air. The plasma-sprayed expanded mesh was then allowed to cool and then was coated with a precursor composition, by means of a brush in a series of coating, heating and cooling steps. The precursor composition was the same as the second precursor composition of Example 2, i.e., hexa-ammineiridium(III) hydroxide [Ir(NH₃)₆](OH)₃ brought to a volume of 100mL with deionized water. Initially, the plasma-sprayed expanded mesh was coated with the precursor composition and then heated in an oven at 350°C for 15 minutes in air. After cooling, the mesh was again coated with the precursor composition and again heated in the oven at 350°C for 15 minutes. This process of coating, heating and cooling was repeated to achieve a load of 1.88 g_{METAL}/m².

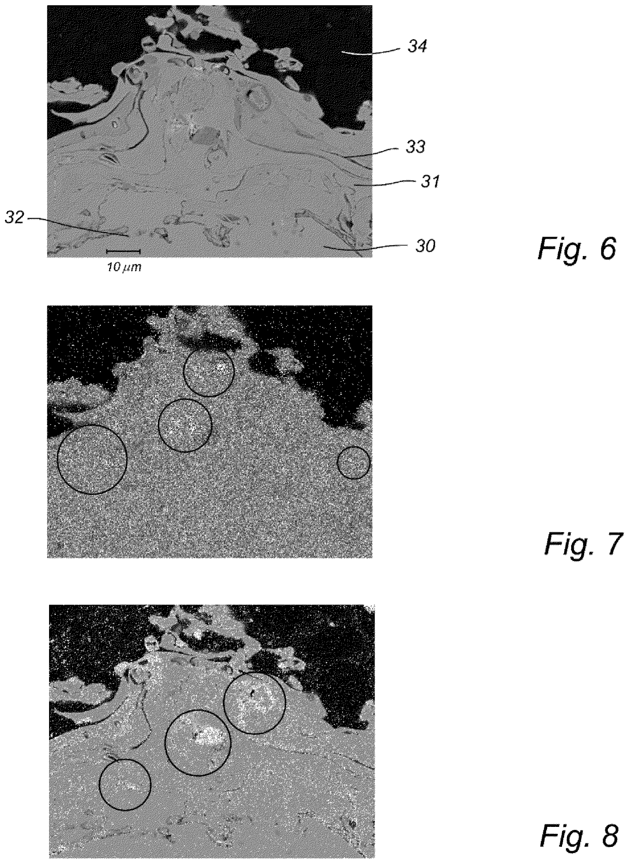

The foregoing process produced an electrode E3 having, on each side, a catalytic layer and an active composition. The catalytic layer was mostly nickel with a small amount of NiO. The active composition was 9.78 mmol/m² of iridium oxide. When viewed with a scanning electron microscope (SEM), the catalytic layer was a nickel matrix formed by nickel particles and a thin crust of NiO, with the iridium oxide being distributed into the porosity of the catalytic layer (see Figures 6 - 8). The combination of the catalytic layer and the active composition had a thickness (on each side) of just less than 50 µm and had a porosity of 0.4 m²/g (BET). The combination comprised comprised 98.7 mole percent nickel, 0.9 mole percent nickel oxide and 0.4 mole percent iridium oxide.

### COMPARATIVE EXAMPLE 1

A 100X100 mm piece of nickel expanded mesh was plasma sprayed with 99.9% purity nickel powder with a particle size of -45 / +10 µm (Fe <0.5, O<0.4, C<0.02, S<0.01 in ambient air on both sides in an amount of 13.0 ± 0.9 g/dm² and with a target thickness of 300 µm and 100 µm on the other side. Afterwards, the sprayed mesh was heated in an oven at 350°C for 15 minutes. The sprayed expanded mesh was then allowed to cool, thereby forming an electrode CE1 with only a catalytic layer comprising nickel and nickel oxide. The catalytic layer had a thickness (on each side) of just less than 200 µm and had a porosity of 0.4 m²/g (BET).

### COMPARATIVE EXAMPLE 2

A 100X100 mm piece of nickel expanded mesh was plasma sprayed with 99.9% purity nickel powder with a particle size of -45 / +10 µm (Fe <0.5, O<0.4, C<0.02, S<0.01 in ambient air on both sides in an amount of 4.5 ± 0.5 g/dm² and with a target thickness of 45 µm. Afterwards, the sprayed expanded mesh was heated in an oven at 350°C for 15 minutes. The sprayed wire mesh was then allowed to cool, thereby forming an electrode CE2 with only a catalytic layer comprising nickel and nickel oxide. The catalytic layer had a thickness (on one side) of just less than 50 µm and had a porosity of 0.4 m²/g (BET).

### [COMPARATIVE EXAMPLE 3]

Except as noted below, Example 2 was re-performed on another 100X100 mm piece of nickel expanded mesh. The mesh was not plasma sprayed, or otherwise coated with a layer of nickel/nickel oxide or other metal. The active composition was formed directly on the expanded mesh. The same first and second precursor compositions were applied to the expanded mesh in the same manner as in Example 2, except the there was no plasma sprayed layer.

The process produced an electrode CE3 having, on each side, an active composition. The active composition was 9.78 mmol/m² of iridium oxide and.42.7 mmol/m² of nickel cobaltite, which corresponds to 18.6 mole percent iridium oxide and 81.4 mole percent nickel cobaltite.

### TESTING

The electrodes E1, E2, E3, , CE1, CE2 and CE3 were each used as anodes in electrolysis cells and the oxygen overvoltages at the anodes were measured in KOH 25% at 80°C with a three electrodes set-up, using a SCE reference electrode and a VMP3 Biologic potentiostat equipped with a 20A Booster. The iR drop was measured by means of Electrochemical Impedance Spectroscopy (EIS). The resulting electrode potential determined at 10 kA/m² was subtracted by the thermodynamic oxygen evolution potential at pH14. Results of these measurements are shown in Table 1 below. In addition, electrolysis cells with the E2, E3, CE1, CE2 and CE3 anodes, respectively, were connected to receive electric power having a current of 10 kA/m² and were then subjected to a series of 50 shutdowns of electric power, with on/off cycles of the duration of 6 hours. The voltages at 10 kA/m² of the cells were measured after each shutdown. The results of these measurements are also shown in Table 1 below.

**TABLE 1**

| **Electrode** | **O₂ Overvoltage (mV) at 10 kA/m²** | **Shutdown test** |
|---|---|---|
| E1 | 240 | not performed |
| E2 | 252 | 0.4 mV per 28 shutdowns |
| E3 | 252 | 2.4 ± 0.5 mV per 28 shutdown |
| CE1 | 350 | 0.1 ± 0.1 mV per 30 shutdown |
| CE2 | 380 | 0.1 ± 0.1 mV per 30 shutdown |
| CE3 | 260 | 10.3 ± 1.2 mV per 14 shutdown |

The results of the tests show that while the catalytic layer of electrode CE2 is substantially thinner than the catalytic layer of electrode CE1 (≈50 µm versus ≈200 µm), the oxygen overvoltage of electrode CE2 was not that much greater than electrode CE1 (380 mV versus 350 mV). The electrodes E1-E3 had substantially better oxygen overvoltages than both the electrodes CE1 and CE2. The electrode E2 had significantly better oxygen overvoltage than CE1 and CE2 and had better shutdown tolerance than the electrodes E3, and CE3. The electrode CE3 had good oxygen overvoltage, but not very good shutdown tolerance. The results show that an electrode with only the active composition 26, without the catalytic layer 24, has a good oxygen overvoltage, but poor shutdown tolerance. Conversely, electrodes with only catalytic layer 24, without the active composition 26, has good shutdown tolerance, but poor overvoltage. The synergic combination of catalytic layer 24 and active composition 26 yields an electrode with enhanced properties, i.e. both good shutdown tolerance and good overvoltage., particularly an active layer comprising both a cobalt compound and an iridium compound. Such an electrode (e.g. electrode E2) also has an improved oxygen overvoltage.

Figures 6 to 8 show SEM/EDAX images of a cross-section of an electrode according to Example 3 which comprises a nickel substrate 30, a catalytic layer 31 made from nickel and a small amount of nickel oxide and an iridium-based active composition thermally applied to the catalytic coating. The SEM image of Fig. 6 shows the morphology of the catalytic layer which was obtained by depositing nickel on a substrate made of a coarse nickel mesh via thermal spray. As can be taken therefrom, the catalytic layer 31 which exhibits some porosity is clearly distinguished by a well-defined interface 32 from the dense nickel substrate 30 which exhibits essentially no porosity. The porosity of the catalytic layer 31 essentially results from cracks 33 being formed within the catalytic layer 31. Predominantly, these cracks 33 are essentially orientated parallel to the interface 32 between substrate 30 and catalytic layer. The black area 34 corresponds to a resin required for sample preparation. The active composition (not visible in Fig. 6) can penetrate into the catalytic layer via cracks 33 as can be taken from the SEM/EDAX image of Fig. 7 which shows the same cross-sectional region of the electrode as Fig. 6. Gray areas correspond to nickel of the catalytic layer while white areas/dots correspond to iridium of the active composition. Although the iridium EDAX map ay is quite noisy, distinct patches with increased iridium content, indicated by black circles in Fig. 7, are clearly visible indicating that the active composition has penetrated into the catalytic layer and accumulates in regions corresponding to porous regions in Fig. 6. Fig. 8 is an SEM/EDAX image showing the oxygen distribution in the same region of the electrode of Fig. 6. The oxygen EDAX image (white) is overlaid to the SEM image (gray) of Fig. 6. Disregarding noise, it can be taken from Fig. 8 that the substrate 30 consists of pure nickel while the catalytic layer 31 comprises patches containing oxygen (black circles) which correspond to the nickel oxide component of the catalytic layer.

## Claims

1. An electrode for use in an alkaline electrolysis process, the electrode comprising:
a metal substrate;
a catalytic layer disposed on the metal substrate, the catalytic layer comprising nickel and nickel oxide and having a porosity less than about 1 m²/g measured by BET; and
an active composition disposed both on and within the catalytic layer, the active composition comprising one or more metal compounds selected from the group consisting of a cobalt compound, an iridium compound, a rhodium compound, an iron compound, a platinum compound, a lithium compound and a manganese compound.

2. The electrode of claim 1, wherein the electrode has a double layer capacitance, normalized by the loading of the catalyitic layer referred to the metal, in a range of from about 1.0 to about 10.0 mF/g.

3. The electrode of claim 1 or 2, wherein the active composition comprises more than 30 mole percent of one of the cobalt compound and the iridium compound.

4. The electrode of claim 3, wherein the active composition comprises more than 60 mole percent of one of the cobalt compound and the iridium compound, and wherein the cobalt compound comprises nickel cobaltite and the iridium compound comprises iridium oxide,
wherein the active composition preferably consists essentially of nickel cobaltite or wherein the active composition preferably consists essentially of iridium oxide.

5. The electrode of claim 1, wherein the active composition comprises from about 40 to about 90 mole percent of the cobalt compound, from about 0 to about 50 mole percent of the iridium compound and from about 0 to about 20 mole percent of one or more of the rhodium compound, the iron compound, the platinum compound, the lithium compound, the manganese compound.

6. The electrode of claim 5, wherein the active composition comprises about 70 to about 90 mole percent of the cobalt compound, from about 10 to about 30 mole percent of the iridium compound and from about 0 to about 10 mole percent of one or more of the rhodium compound, the iron compound, the platinum compound, the lithium compound, and the nickel compound,
preferably, the cobalt compound comprising nickel cobaltite and the iridium compound comprising iridium oxide.

7. The electrode of claim 1, wherein the active composition comprises one or more metal compounds selected from the group consisting of nickel cobaltite, iridium oxide, iron oxide, and lithium nickel oxide.

8. The electrode of claims 1-7, wherein the catalytic layer has a thickness in a range of from about 10 µm to about 50 µm.

9. The electrode of claims 1-8, wherein the metal substrate of the electrode comprises one or more metals selected from the group consisting of nickel, nickel alloys and iron alloys.

10. The electrode of claim 9, wherein the catalytic layer is a first catalytic layer and wherein the metal substrate comprises nickel substrate;
wherein the metal substrate has opposing first and second sides, the first catalytic layer being disposed on and adhered to the first side of the metal substrate;
wherein the electrode further comprises a second catalytic layer disposed on and adhered to the second side of the metal substrate, the second catalytic layer having substantially the same composition as the first catalytic layer; and
wherein the active composition is disposed both on and within the second catalytic layer.

11. An alkaline water electrolysis unit comprising the electrode of claims 1-10, wherein the electrode is an anode, and wherein the alkaline water electrolysis unit further comprises:
a cathode; and
an electrolyte solution that is substantially free of chlorine.

12. A method of forming an electrode, comprising:
providing a metal substrate;
forming a catalytic layer on the metal substrate via thermal spraying, laser cladding or electroplating, the catalytic layer comprising
nickel and nickel oxide and having a porosity less than about 1 m²/g measured by BET; and
applying an active composition to the catalytic layer, wherein the step of applying the active composition comprises applying one or more precursor compositions to the catalytic layer and then heating the one or more precursor compositions and the catalytic layer to form the active composition.

13. The method of claim 12, wherein the step of forming the catalytic layer is performed by thermal spraying and the catalytic layer has a double layer capacitance in a range of from about 1.0 to about 10.0 mF/g.

14. The method of claim 12 or 13, wherein the step of forming the catalytic layer is performed by thermal spraying and comprises electric wire or plasma spraying nickel powder on the metal substrate in ambient air.
preferably, the active composition comprising one or more metal compounds selected from the group consisting of a cobalt compound, an iridium compound, a rhodium compound, an iron compound, a platinum compound, a lithium compound, a manganese compound and the precursor composition comprising precursors of said one or more metal compounds.

15. The method of claim 14, wherein the active composition comprises from about 40 to about 90 mole percent of the cobalt compound and from about 10 to about 50 mole percent of the iridium compound, preferably, the cobalt compound comprising nickel cobaltite and the iridium compound comprising iridium oxide.

## Patentansprüche

1. Elektrode zur Verwendung in einem alkalischen Elektrolyseverfahren, wobei die Elektrode umfasst:
ein Metallsubstrat;
eine katalytische Schicht, die auf dem Metallsubstrat angeordnet ist, wobei die katalytische Schicht Nickel und Nickeloxid umfasst und eine Porosität von weniger als etwa 1 m /g, gemessen nach BET, aufweist; und
eine aktive Zusammensetzung, die sowohl auf als auch innerhalb der katalytischen Schicht angeordnet ist, wobei die aktive Zusammensetzung eine oder mehrere Metallverbindungen umfasst, ausgewählt aus der Gruppe bestehend aus einer Kobaltverbindung, einer Iridiumverbindung, einer Rhodiumverbindung, einer Eisenverbindung, einer Platinverbindung, einer Lithiumverbindung und einer Manganverbindung.

2. Elektrode gemäß Anspruch 1, wobei die Elektrode eine Doppelschichtkapazität, bezogen auf die Beladung der katalytischen Schicht mit dem Metall, in einem Bereich von etwa 1,0 bis etwa 10,0 mF/g aufweist.

3. Elektrode gemäß Anspruch 1 oder 2, wobei die aktive Zusammensetzung mehr als 30 Molprozent der Kobaltverbindung oder der Iridiumverbindung umfasst.

4. Elektrode gemäß Anspruch 3, wobei die aktive Zusammensetzung mehr als 60 Molprozent der Kobaltverbindung oder der Iridiumverbindung umfasst, und wobei die Kobaltverbindung Nickelkobaltit und die Iridiumverbindung Iridiumoxid umfasst, wobei die aktive Zusammensetzung vorzugsweise im Wesentlichen aus Nickelkobaltit besteht oder wobei die aktive Zusammensetzung vorzugsweise im Wesentlichen aus Iridiumoxid besteht.

5. Elektrode gemäß Anspruch 1, wobei die aktive Zusammensetzung von etwa 40 bis etwa 90 Molprozent der Kobaltverbindung, von etwa 0 bis etwa 50 Molprozent der Iridiumverbindung und von etwa 0 bis etwa 20 Molprozent einer oder mehrerer der Rhodiumverbindung, der Eisenverbindung, der Platinverbindung, der Lithiumverbindung und der Manganverbindung umfasst.

6. Elektrode gemäß Anspruch 5, wobei die aktive Zusammensetzung etwa 70 bis etwa 90 Mol-% der Kobaltverbindung, etwa 10 bis etwa 30 Mol-% der Iridiumverbindung und etwa 0 bis etwa 10 Mol-% einer oder mehrerer der Rhodiumverbindung, der Eisenverbindung, der Platinverbindung, der Lithiumverbindung und der Nickelverbindung umfasst,
wobei die Kobaltverbindung vorzugsweise Nickelkobaltit umfasst und die Iridiumverbindung Iridiumoxid umfasst.

7. Elektrode gemäß Anspruch 1, wobei die aktive Zusammensetzung eine oder mehrere Metallverbindungen umfasst, die aus der Gruppe ausgewählt sind, die aus Nickelkobaltit, Iridiumoxid, Eisenoxid und Lithiumnickeloxid besteht.

8. Elektrode gemäß Anspruch 1-7, wobei die katalytische Schicht eine Dicke im Bereich von etwa 10 µm bis etwa 50 µm aufweist.

9. Elektrode gemäß den Ansprüchen 1-8, wobei das Metallsubstrat der Elektrode ein oder mehrere Metalle umfasst, die aus der Gruppe ausgewählt sind, die aus Nickel, Nickellegierungen und Eisenlegierungen besteht.

10. Elektrode gemäß Anspruch 9, wobei die katalytische Schicht eine erste katalytische Schicht ist und wobei das Metallsubstrat ein Nickelsubstrat umfasst;
wobei das Metallsubstrat eine erste und eine zweite Seite aufweist, die einander gegenüberliegen, wobei die erste katalytische Schicht auf der ersten Seite des Metallsubstrats angeordnet ist und an dieser haftet;
wobei die Elektrode ferner eine zweite katalytische Schicht umfasst, die auf der zweiten Seite des Metallsubstrats angeordnet ist und daran haftet, wobei die zweite katalytische Schicht im Wesentlichen die gleiche Zusammensetzung wie die erste katalytische Schicht aufweist; und
wobei die aktive Zusammensetzung sowohl auf als auch innerhalb der zweiten katalytischen Schicht angeordnet ist.

11. Alkalische Wasserelektrolyseeinheit, umfassend die Elektrode nach den Ansprüchen 1-10, wobei die Elektrode eine Anode ist und wobei die alkalische Wasserelektrolyseeinheit ferner umfasst:
eine Kathode; und
eine Elektrolytlösung, die im Wesentlichen chlorfrei ist.

12. Verfahren zur Herstellung einer Elektrode, umfassend:
Bereitstellung eines Metallsubstrats;
Ausbilden einer katalytischen Schicht auf dem Metallsubstrat durch thermisches Spritzen, Laserplattieren oder Elektroplattieren, wobei die katalytische Schicht Folgendes umfasst
Nickel und Nickeloxid und mit einer Porosität von weniger als etwa 1 m /g, gemessen nach BET; und
Aufbringen einer aktiven Zusammensetzung auf die katalytische Schicht, wobei der Schritt des Aufbringens der aktiven Zusammensetzung das Aufbringen einer oder mehrerer Vorläuferzusammensetzungen auf die katalytische Schicht und dann das Erhitzen der einen oder mehreren Vorläuferzusammensetzungen und der katalytischen Schicht zur Bildung der aktiven Zusammensetzung umfasst.

13. Verfahren gemäß Anspruch 12, wobei der Schritt der Bildung der katalytischen Schicht durch thermisches Sprühen durchgeführt wird und die katalytische Schicht eine Doppelschichtkapazität in einem Bereich von etwa 1,0 bis etwa 10,0 mF/g aufweist.

14. Verfahren gemäß Anspruch 12 oder 13, wobei der Schritt der Bildung der katalytischen Schicht durch thermisches Spritzen durchgeführt wird und das elektrische Draht- oder Plasmaspritzen von Nickelpulver auf das Metallsubstrat in Umgebungsluft umfasst,
wobei die aktive Zusammensetzung vorzugsweise eine oder mehrere Metallverbindungen umfasst, ausgewählt aus der Gruppe, bestehend aus einer Kobaltverbindung, einer Iridiumverbindung, einer Rhodiumverbindung, einer Eisenverbindung, einer Platinverbindung, einer Lithiumverbindung und einer Manganverbindung, und die Vorläuferzusammensetzung Vorläufer der einen oder mehreren Metallverbindungen umfasst.

15. Verfahren gemäß Anspruch 14, wobei die aktive Zusammensetzung etwa 40 bis etwa 90 Molprozent der Kobaltverbindung und etwa 10 bis etwa 50 Molprozent der Iridiumverbindung umfasst, wobei die Kobaltverbindung vorzugsweise Nickelkobaltit umfasst und die Iridiumverbindung Iridiumoxid umfasst.

## Revendications

1. Électrode à utiliser dans un procédé d'électrolyse alcaline, l'électrode comprenant :
un substrat métallique ;
une couche catalytique disposée sur le substrat métallique, la couche catalytique comprenant du nickel et de l'oxyde de nickel et présentant une porosité inférieure à environ 1 m²/g mesurée par BET ; et
une composition active disposée à la fois sur et à l'intérieur de la couche catalytique, la composition active comprenant un ou plusieurs composés métalliques choisis dans le groupe constitué d'un composé de cobalt, d'un composé d'iridium, d'un composé de rhodium, d'un composé de fer, d'un composé de platine, d'un composé de lithium et d'un composé de manganèse.

2. Électrode selon la revendication 1, dans laquelle l'électrode présente une capacité de double couche, normalisée par la charge de la couche catalytique par rapport au métal, dans une plage d'environ 1,0 à environ 10,0 mF/g.

3. Électrode selon la revendication 1 ou 2, dans laquelle la composition active comprend plus de 30 pour cent en mole de l'un du composé de cobalt et du composé d'iridium.

4. Électrode selon la revendication 3, dans laquelle la composition active comprend plus de 60 pour cent en mole de l'un du composé de cobalt et du composé d'iridium, et dans laquelle le composé de cobalt comprend de la cobaltite de nickel et le composé d'iridium comprend de l'oxyde d'iridium,
dans laquelle la composition active consiste de préférence essentiellement en de la cobaltite de nickel ou
dans laquelle la composition active consiste de préférence essentiellement en de l'oxyde d'iridium.

5. Électrode selon la revendication 1, dans laquelle la composition active comprend d'environ 40 à environ 90 pour cent en mole du composé de cobalt, d'environ 0 à environ 50 pour cent en mole du composé d'iridium et d'environ 0 à environ 20 pour cent en mole d'un ou plusieurs parmi le composé de rhodium, le composé de fer, le composé de platine, le composé de lithium, le composé de manganèse.

6. Électrode selon la revendication 5, dans laquelle la composition active comprend environ 70 à environ 90 pour cent en mole du composé de cobalt, d'environ 10 à environ 30 pour cent en mole du composé d'iridium et d'environ 0 à environ 10 pour cent en mole d'un ou plusieurs parmi le composé de rhodium, le composé de fer, le composé de platine, le composé de lithium et le composé de nickel,
de préférence, le composé de cobalt comprenant de la cobaltite de nickel et le composé d'iridium comprenant de l'oxyde d'iridium.

7. Électrode selon la revendication 1, dans laquelle la composition active comprend un ou plusieurs composés métalliques choisis dans le groupe constitué de la cobaltite de nickel, de l'oxyde d'iridium, de l'oxyde de fer et de l'oxyde de lithium et de nickel.

8. Électrode selon les revendications 1 à 7, dans laquelle la couche catalytique présente une épaisseur dans une plage d'environ 10 µm à environ 50 µm.

9. Électrode selon les revendications 1 à 8, dans laquelle le substrat métallique de l'électrode comprend un ou plusieurs métaux choisis dans le groupe constitué de nickel, d'alliages de nickel et d'alliages de fer.

10. Électrode selon la revendication 9, dans laquelle la couche catalytique est une première couche catalytique et dans laquelle le substrat métallique comprend un substrat de nickel ;
dans laquelle le substrat métallique présente des premier et second côtés opposés, la première couche catalytique étant disposée sur et mise en adhérence au premier côté du substrat métallique ;
dans laquelle l'électrode comprend en outre une seconde couche catalytique disposée sur et mise en adhérence au second côté du substrat métallique, la seconde couche catalytique présentant sensiblement la même composition que la première couche catalytique ; et
dans laquelle la composition active est disposée à la fois sur et à l'intérieur de la seconde couche catalytique.

11. Unité d'électrolyse d'eau alcaline comprenant l'électrode des revendications 1 à 10, dans laquelle l'électrode est une anode, et dans laquelle l'unité d'électrolyse d'eau alcaline comprend en outre :
une cathode ; et
une solution d'électrolyte qui est sensiblement exempte de chlore.

12. Procédé de formation d'une électrode, comprenant les étapes consistant à :
fournir un substrat métallique ;
former une couche catalytique sur le substrat métallique par pulvérisation thermique, par revêtement laser ou galvanoplastie, la couche catalytique comprenant du nickel et de l'oxyde de nickel et présentant une porosité inférieure à environ 1 m²/g mesurée par BET ; et
appliquer une composition active sur la couche catalytique, dans lequel l'étape d'application de la composition active comprend l'application d'une ou plusieurs compositions de précurseur sur la couche catalytique, puis le chauffage des une ou plusieurs compositions de précurseur et de la couche catalytique pour former la composition active.

13. Procédé selon la revendication 12, dans lequel l'étape de formation de la couche catalytique est réalisée par pulvérisation thermique et la couche catalytique présente une capacité de double couche dans une plage d'environ 1,0 à environ 10,0 mF/g.

14. Procédé selon la revendication 12 ou 13, dans lequel l'étape de formation de la couche catalytique est effectuée par pulvérisation thermique et comprend la pulvérisation de fil électrique ou de plasma de poudre de nickel sur le substrat métallique à l'air ambiant,
de préférence, la composition active comprend un ou plusieurs composés métalliques choisis dans le groupe constitué d'un composé de cobalt, d'un composé d'iridium, d'un composé de rhodium, d'un composé de fer, d'un composé de platine, d'un composé de lithium, d'un composé de manganèse et de la composition de précurseur comprenant des précurseurs desdits un ou plusieurs composés métalliques.

15. Procédé selon la revendication 14, dans lequel la composition active comprend d'environ 40 à environ 90 pour cent en mole du composé de cobalt et d'environ 10 à environ 50 pour cent en mole du composé d'iridium, de préférence le composé de cobalt comprenant de la cobaltite de nickel et le composé d'iridium comprenant de l'oxyde d'iridium.
